(19) Europäisches Patentamt
European Patent Office
Office européen des brevets

(11) Veröffentlichungsnummer: **0 265 825 B1**

(12) **EUROPÄISCHE PATENTSCHRIFT**

(45) Veröffentlichungstag der Patentschrift: **17.06.92**

(51) Int. Cl.[5]: **C11D 3/48**, A01N 35/02

(21) Anmeldenummer: **87115400.1**

(22) Anmeldetag: **21.10.87**

Teilanmeldung 90112219.2 eingereicht am 21/10/87.

# (54) Verwendung von Desinfectionsmitteln zur Bekämpfung und Abtötung von parasitären Dauerformen.

(30) Priorität: **27.10.86 DE 3636541**

(43) Veröffentlichungstag der Anmeldung:
**04.05.88 Patentblatt 88/18**

(45) Bekanntmachung des Hinweises auf die Patenterteilung:
**17.06.92 Patentblatt 92/25**

(84) Benannte Vertragsstaaten:
**AT BE CH DE ES FR GB GR IT LI LU NL SE**

(56) Entgegenhaltungen:

| | |
|---|---|
| **EP-A- 184 297** | **EP-A- 193 344** |
| **EP-A- 252 310** | **EP-A- 255 875** |
| **EP-A- 264 658** | **EP-A- 0 087 049** |
| **EP-A- 0 180 841** | **WO-A-86/06934** |
| **WO-A-87/06099** | **DD-A- 98 447** |
| **DE-A- 1 912 126** | **DE-A- 2 317 225** |
| **DE-A- 2 341 785** | **DE-A- 3 117 792** |
| **DE-B- 1 074 189** | **DE-B- 2 516 670** |
| **GB-A- 1 286 978** | **GB-A- 1 604 859** |
| **GB-A- 2 024 626** | **GB-A- 2 074 866** |

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Guhl, Walter, Dr.**
**Wiedenhofer Strasse 27**
**W-5657 Haan(DE)**
Erfinder: **Scholz, Siegfried, Dr.**
**Benrodestrasse 23**
**W-4000 Düsseldorf 13(DE)**
Erfinder: **Schenker, Gilbert, Dr.**
**Hermann-Hesse-Strasse 5**
**W-4006 Erkrath 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

CHEMICAL ABSTRACTS, Band 80, Nr.21, 27.Mai 1974, Seite 130, Zusammenfassung Nr.117195k, Columbus, Ohio, US;&JP-A-73082045 (TAISHO PHARMACEUTICAL CO.)

CHEMICAL ABSTRACTS ; Band 104, Nr.7, 17.Februar 1986, Seite 182, Zusammenfassung Nr. 47059g, Columbus, Ohio, US; V.F. ABRAMOVA et al.: Deinfestation media in coccidiosis of rabbits ", & PROFIL.PARAZIT.BOLEZN.ZHIVOTN. 1985, 30-3

CHEMICAL ABSTRACTS, Band 78,Nr. 15,16. April 1973, Seite 112, Zusammenfassung Nr.93421m, Columbus, Ohio,US A.I. KLYCHEV et al.:"Methods for studying the action of chemical substances on immature Coccidia oocysts of poultry"

Chemical Abstracts, Band 92, Nr. 9, 3. März 1980, Seite 176, Zusammenfassung Nr. 70877q, Columbus, Ohio, US; L. PARA et al.: "Disinfection and disinfectants in industrial poultry production" & Veterinarstvi 1979, 29 (9), 418-20.

**Beschreibung**

Die Erfindung betrifft die Verwendung von Desinfektionsmitteln zur Bekämpfung und Abtötung von parasitären Dauerformen auf der Basis von Gemischen aus desinfizierenden Wirkstoffen und oberflächenaktiven Wirkstoffen.

Die landwirtschaftliche Haltung und Zucht verschiedener Tierarten, beispielsweise Geflügel, Schweine oder Rinder, wird dadurch beeinträchtigt bzw. die Zuchterfolge werden dadurch gemindert, daß die genannten Tierarten mit Coccidien und Spulwürmern befallen werden. Diese Parasitenarten schmarotzen im Darmtrakt und schädigen die Tiere durch Nährstoffentzug, Saug- und Einwanderungswunden und führen bei Massenbefall einzelner Tiere zu Leistungsdepression, Kümmern oder Tod, weil u.a. die von den Parasiten ausgeschiedenen Toxine auf das organische Gleichgewicht der Nutztiere einwirken.

Eine gezielte Wurm- bzw. Coccidienbekämpfung kann jedoch nicht darauf beschränkt werden, den von den Parasiten befallenen Nutztieren Wurm- bzw. Coccidienmittel zu verfüttern, um die Parasiten im Darmkanal abzutöten. Vielmehr muß bei der Parasitenbekämpfung berücksichtigt werden, daß die Schmarotzer sehr widerstandsfähige parasitäre Dauerformen (Spulwurmeier, Coccidienoozysten) ausscheiden, die mit dem Kot der befallenen Nutztiere an die Außenwelt gelangen und den Stall verseuchen. Diese Dauerformen sind erneut invasionsfähig, d.h. sie können wieder in den Nährstoffkreislauf der Nutztiere Eingang finden und dadurch von neuem in den Organismus der Nutztiere gelangen. Die Folge ist ein erneuter Befall mit Coccidien bzw. Spulwürmern.

Üblicherweise wird daher - in Ergänzung zu einer Verfütterung von Anti-Parasitenmitteln - gegen die ausgeschiedenen, wiederstandsfähigen Dauerformen der Parasiten eine Spezialdesinfektion der Stallungen durchgeführt, wodurch die Dauerformen abgetötet werden und der Kreislauf (Ausscheidung der Parasitendauerformen und Wiederaufnahme über den Kot) durch Desinfektion wirksam unterbrochen wird.

Für derartige Stalldesinfektionsmaßnahmen sind bereits Spezialdesinfektionsmittel auf der Basis von phenolischen Wirkstoffen und Schwefelkohlenstoff erfolgreich in Gebrauch. Dem Schwefelkohlenstoff fällt dabei die Aufgabe zu, die sehr festen Membranen der Parasiteneier oder -oozysten zu durchdringen und den phenolischen Wirkstoff zur Abtötung des Ei- bzw. Oozysteninhaltes in das Innere der Parasitendauerformen einzuschleusen. Der Einsatz von Schwefelkohlenstoff für derartige Zwecke ist jedoch wegen der hohen Explosionsgefahr von $CS_2$ und seiner starken Toxizität nicht unbedenklich.

Aus **Profil.Parazit.Bolezn.Zhivotn. 30 (1985),** zitiert nach **Chem. Abstr. Vol. 104,7, Nr 47059g** geht beispielsweise hervor, daß die Entwicklung von Oozysten der Kaninchencoccidiose durch wässrige Zusammensetzungen gehemmt wird, die Tetrachlorkohlenstoff, Natriumhydroxid, Ammoniak-Wasser und Natriumchlorid enthalten.

In der Britischen Patentschrift **GB 1 604 859** wird ein Verfahren zur Bekämpfung von Ekto-Parasiten, insbesondere von Läusen und Milben beschrieben, bei dem man auf das zu behandelnde Substrat ein Gemisch aus einem Monoalkohol mit 4 bis 24 Kohlenstoffatomen und einem Polyoxyethylenderivat aufbringt.

Die Deutsche Offenlegungsschrift **DE-OS 19 12 126** betrifft ein Präparat zur Abtötung von Coccidienoozysten und Ascarideneiern, das eine unter den Anwendungsbedingungen Schwefelkohlenstoff abspaltende Verbindung enthält.

Die Deutsche Patentschrift **DD 98 447** beschreibt Mittel zur Bekämpfung ektogener Entwicklungsstadien parasitischer Würmer, die als Wirkstoffe substituierte Phenole, Benzylisothiocyanate, Alkoxyazomethine und Benzimidazole und als Tenside Paraffinsulfonate enthalten.

In der Deutschen Offenlegungsschrift **DE-OS 23 17 225** wird zur Überwindung der genannten Nachteile ein Mittel zur Stalldesinfektion auf der Basis von desinfizierend wirkenden Phenolen oder Phenolderivaten und einem die Membranen der parasitären Dauerformen durchdringenden Lösungsmittel vorgeschlagen, das als Lösungsmittel eine Kombination aus Perchlorethylen und einem niederen Alkohol enthält. Nachteil dieser Zusammensetzung zur Desinfektion gegen parasitäre, invasionsfähige Dauerformen ist jedoch der Anteil an Perchlorethylen, der mit 10 bis 50 Gew-% ausgesprochen hoch liegt. Chlorierte Kohlenwasserstoffe sind, wie inzwischen allgemein bekannt, als ausgesprochen langlebige Umweltgifte erkannt worden, die sich insbesondere im Fettgewebe höherer Organismen anreichern und in der Nahrungskette zu Dauerschäden in höheren Organismen führen können. Zudem erwiesen sich Mittel mit einem Gehalt an chlorierten Kohlenwasserstoffen in der Praxis als nicht so wirksam, daß sich diese hätten durchsetzen können. Aus ökologischen und ökonomischen Gründen sollte deswegen auf die Verwendung chlorierter Kohlenwasserstoffe in Desinfektionsmitteln zur Bekämfpung parasitärer Dauerformen weitgehend, besser vollständig, verzichtet werden.

Die Erfindung stellte sich die Aufgabe, Desinfektionsmittel für die Verwendung in der Bekämpfung und Abtötung parasitärer Dauerformen, wie Spulwurmeier oder Coccidienoozysten zur Verfügung zu stellen, die

die genannten Nachteile des Standes der Technik nicht aufweisen. So sollte eine gezielte Wirksamkeit der Desinfektionsmittel gegen die genannten parasitären invasionsfähigen Dauerformen mit einer guten Handhabbarkeit kombiniert, d.h. insbesondere die aus der Verwendung von Schwefelkohlenstoff bekannte Explosionsgefahr bzw. Toxizität völlig vermieden werden. Zudem sollten ausschließlich Bestandteile in den Desinfektionsmitteln Verwendung finden, die keine Umweltgefährdung mit sich bringen, wie sie von chlorierten Kohlenwasserstoffen bekannt ist. Erwünscht war außerdem eine desinfizierende Wirkung auch gegenüber sonstigen, in Tierstallungen auftretenden Schädlingen, wie Pilzen, Bakterien oder Viren, deren Bekämpfung auf diese Weise gleichzeitg mit der Bekämpfung schwierig abzutötender parasitärer Formen erfolgen könnte.

Gegenstand der Erfindung ist die Verwendung von Desinfektionsmitteln, die

A) einen oder mehrere Desinfektionswirkstoffe aus der Gruppe aliphatischer Aldehyde mit 1 bis 5 C-Atomen,

B) einen oder mehrere oberflächenaktive Wirkstoffe, aus der Gruppe

a) alpha-Sulfofettsäureester und ihre Salze der allgemeinen Formel **(I)**,

$$\begin{array}{l} R^1\text{-}\underset{\displaystyle SO_3M^+}{\underset{|}{CH}}\text{-}COOR^2 \end{array} \qquad (I)$$

in der

- $R^1$ für einen geradkettigen oder verzweigten Alkylrest mit 8 bis 22 C-Atomen,
- $R^2$ für einen geradkettigen oder verzweigten Alkylrest mit 1 bis 4 C-Atomen und
- $M^+$ für das Wasserstoffion, ein Alkalimetallion oder ein Ammoniumion

steht,

b) Ethylenoxid- und/oder Propylenoxid-Anlagerungsprodukte an Fettalkohole der allgemeinen Formel **(II)**,

$$R^3\text{-O-}(CH_2\text{-}\underset{\displaystyle R^4}{\underset{|}{CH}}O)_m\text{-}R^5 \qquad (II)$$

in der

- $R^3$ für einen geradkettigen oder verzweigten Alkylrest mit 8 bis 18 C-Atomen,
- $R^4$ für H oder $CH_3$,
- $R^5$ für einen geradkettigen oder verzweigten Alkylrest mit 1 bis 18 C-Atomen und
- m für eine ganze Zahl im Bereich von 1 bis 50

steht,

c) Umesterungsprodukte von alpha-Sulfofettsäureestern und ihren Salzen der allgemeinen Formel (I), in der $R^1$, $R^2$ und $M^+$ die oben genannten Bedeutungen haben, mit Anlagerungsprodukten von Ethylenoxid und/oder Propylenoxid an Fettalkohole der allgemeinen Formel **(III)**,

$$R^6O(CH_2CH_2O)_m(CH_2\underset{\displaystyle R^4}{\underset{|}{CH}}O)_n(CH_2CH_2O)_pH \qquad (III)$$

in der

- $R^6$ für einen geradkettigen oder verzweigten Alkylrest mit 1 bis 18 C-Atomen,
- $R^4$ für H oder $CH_3$ steht und
- m, n und p unabhängig voneinander ganze Zahlen im Bereich von 0 bis 10 bedeuten, die

Summe (m + n + p) maximal 30 und die Summe (m + p) maximal 20 ist,

d) Anlagerungsprodukte von Ethylenoxid und/oder Propylenoxid an Alkylphenole,

e) Fettamine mit 8 bis 18 C-Atomen im Alkylrest,

f) quartäre Ammoniumverbindungen der allgemeinen Formel (IV),

$$R^7R^8R^9R^{10}N^+X^- \quad \textbf{(IV)}$$

in der

| | |
|---|---|
| $R^7$ | für einen geradkettigen Alkylrest mit 8 bis 18 C-Atomen, |
| $R^8$ und $R^9$ | unabhängig voneinander für einen geradkettigen Alkylrest mit 1 bis 4 C-Atomen, |
| $R^{10}$ | für einen Benzylrest oder für einen geradkettigen Alkylrest mit 1 bis 4 C-Atomen, bevorzugt für Methyl, und |
| X | für Halogen |

steht,

g) 2-Pyridinthiol-N-oxid und seine wasserlöslichen Alkalimetall- oder Erdalkalimetallsalze und

h) Alkylmono- oder -oligoglucoside mit 8 bis 18 C-Atomen in einem geradkettigen oder verzweigten Alkylrest und einer Zahl von 1 bis 8 Glucosidresten

und

(C) Wasser

enthalten, zur Bekämpfung und Abtötung von Spulwurmeiern und Coccidienoocysten.

Im Sinne der Erfindung enthalten die Desinfektionsmittel zur Bekämpfung und Abtötung von Spulwurmeiern und Coccidienoozysten im wesentlichen zwei Gruppen von Wirkstoffen: desinfizierend wirkende Substanzen und oberflächenaktive Wirkstoffe. Gegebenenfalls können, wie weiter unten ausgeführt, auch noch weitere, in derartigen Desinfektionsmitteln übliche Duft- und/oder Hilfsstoffe in den erfindungsgemäß zu verwendenden Mitteln enthalten sein. Als Lösemittel, das nebenbei auch die Homogenität und Lagerbeständigkeit der Mittel wesentlich verbessert und ihre Auflösbarkeit in Wasser bei der Herstellung verdünnter Desinfektionslösungen erleichtert, ist in den erfindungsgemäß zu verwendenden Desinfektionsmitteln noch Wasser enthalten.

Die **Komponente A)** wird von aliphatischen Aldehyden mit 1 bis 5 C-Atomen gebildet. Hierfür kommen Methanal (Formaldehyd), Ethanal (Acetaldehyd), Propanal (Propionaldehyd), Butanal (Butyraldehyd), Pentanal (Valeraldehyd), aber auch Dialdehyde wie beispielsweise Glyoxal oder Glutardialdehyd, in Frage. Von den genannten Aldehyden sind Formaldehyd, Glyoxal und Glutardialdehyd als bevorzugte Aldehyde zu nennen, da sie vergleichsweise leicht und preiswert zugänglich sind und eine ausgezeichnete desinfizierende Wirkung ausüben. Mit besonderem Vorteil, d.h. mit besonders guter Wirksamkeit, wird als desinfizierender Wirkstoff in den erfindungsgemäß zu verwendenden Desinfektionsmitteln Formaldehyd eingesetzt.

Je nach der desinfizierenden Wirksamkeit des desinfektionsaktiven Wirkstoffs aus der Gruppe der oben genannten Verbindungen, von denen einer einzeln oder mehrere in Kombination miteinander eingesetzt werden können, sind in den erfindungsgemäß zu verwendenden Desinfektionsmitteln die Desinfektionswirkstoffe in Mengen von 0,1 bis 80 Gew.-%, bezogen auf das Gesamtgewicht des Desinfektionsmittel-Konzentrats,enthalten. Bevorzugte Mengenbereiche der Desinfektionswirkstoffe liegen bei 5 bis 60 Gew.-%, wobei die Mengen der einzelnen Wirkstoffe einerseits oder der Desinfektions-Wirkstoff-Kombinationen andererseits über den gesamten Bereich innerhalb der genannten Grenzen schwanken können.

Neben desinfizierenden Wirkstoffen der genannten Art enthalten die erfindungsgemäß zu verwendenden Desinfektionsmittel einen oder mehrere oberflächenaktive Wirkstoffe (Komponente B). Diese finden sich in den Desinfektionsmitteln in Mengen von 10 bis 50 Gew.-%, bezogen auf das Gesamtgewicht des Desinfektionsmittelkonzentrats. Bevorzugt sind die oberflächenaktiven Wirkstoffe in Mengen von 15 bis 40 Gew.-% vorhanden, wobei die jeweilige Anwendungskonzentration von der oberflächenaktiven Wirksamkeit bzw. der die natürliche Hülle der parasitären Dauerformen permeabel machenden Wirksamkeit der oberflächenaktiven Wirkstoffe abhängt. Es können, wie auch im Falle der desinfizierend wirkenden Substanzen, Einzelsubstanzen aus der genannten Gruppe eingesetzt werden; es ist jedoch auch möglich, zwei oder mehrere oberflächenaktive Wirkstoffe in Kombination miteinander in beliebigen Mengenverhältnissen einzusetzen.

Als oberflächenaktive Wirkstoffe, die die **Komponente B)** bilden, kommen zahlreiche, an sich aus dem Stand der Technik bekannte anionaktive, nichtionische oder kationaktive Tenside in Frage, die die Benetzungswirkung des erfindungsgemäßen Desinfektionsmittels verbessern und in der Lage sind, die Eihülle der parasitären Dauerformen permeabel zu machen.

Anionaktive Tenside, die erfindungsgemäß in den Desinfektionsmitteln verwendet werden können, sind in erster Linie alpha-Sulfofettsäureester und ihre Salze der allgemeinen Formel **(I),**

$$R^1\text{-}CH\text{-}COOR^2 \quad (I)$$
$$|$$
$$SO_3M^+$$

in der

- $R^1$ für einen geradkettigen oder verzweigten Alkylrest mit 8 bis 22 C-Atomen,
- $R^2$ für einen geradkettigen oder verzweigten Alkylrest mit 1 bis 4 C-Atomen und
- $M^+$ für das Wasserstoffion, ein Alkalimetallion, beispielsweise Natrium- oder Kaliumion, oder ein Ammoniumion

steht.

In der allgemeinen Formel **(I)** steht also $R^1$ für die Reste n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Uneicosyl und n-Docosyl und die verzweigten Isomeren der genannten geradkettigen Alkylreste. $R^2$ kann für Methyl, Ethyl, n-Propyl, i-Propyl, n-Butyl, i-Butyl und t-Butyl stehen. $M^+$ kann neben der Bedeutung eines Alkalimetallions, beispielsweise eines Natrium- oder Kaliumions, auch die Bedeutung eines Ammoniumions haben, das sich beispielsweise von primären, sekundären oder tertiären Alkylaminen mit 1 bis 4 C-Atomen pro Alkylrest oder von primären, sekundären oder tertiären Alkanolaminen mit 1 bis 4 C-Atomen pro Alkylengruppe ableitet. Es kommen also beispielsweise Amine mit einem, zwei oder drei Resten aus der Gruppe Methyl, Ethyl, n-Propyl, i-Propyl, n-Butyl, i-Butyl und t-Butyl in Frage. Von den Alkanolaminen kommen solche mit einem, zwei oder drei Hydroxymethylenresten, Hydroxyethylenresten, Hydroxypropylenresten oder Hydroxytetramethylenresten in Frage. Als Ammoniumionen werden bevorzugt die von Alkanolaminen abgeleiteten Ammoniumionen verwendet.

Als anionaktive Tenside der allgemeinen Formel **(I)** sind bevorzugt solche, bei denen $R^1$ für einen geradkettigen Alkylrest mit 12 bis 18 C-Atomen, $R^2$ für Methyl und $M^+$ für $Na^+$ oder das Diethanolammoniumion steht. Die bevorzugt verwendbaren Verbindungen der allgemeinen Formel **(I)** stammen also von Fettsäuren ab, die aus nativen Fetten und Ölen durch Spaltung und anschließende Veresterung oder durch Umesterung mit Methanol im großtechnischen Maßstab bequem zugänglich sind. Es sind in diesem Zusammenhang nicht nur Einzelverbindungen der allgemeinen Formel **(I)**, sondern auch Substanzgemische geeignet, wie sie bei der industriellen Aufarbeitung natürlicher Fette und Öle in großen Mengen anfallen.

In den erfindungsgemäß zu verwendenden Desinfektionsmitteln können anstelle von oder zusammen mit Verbindungen der oben genannten allgemeinen Formel **(I)** auch Ethylenoxid- und/oder Propylenoxid-Anlagerungsprodukte an Fettalkohole der allgemeinen Formel **(II)** enthalten sein,

$$R^3\text{-}O\text{-}(CH_2\text{-}CHO)_m\text{-}R^5 \quad (II)$$
$$|$$
$$R^4$$

in der

- $R^3$ für einen geradkettigen oder verzweigten Alkylrest mit 8 bis 18 C-Atomen,
- $R^4$ für H oder $CH_3$,
- $R^5$ für einen geradkettigen oder verzweigten Alkylrest mit 1 bis 18 C-Atomen und
- m für eine ganze Zahl im Bereich von 1 bis 50

steht.

Derartige Anlagerungsprodukte von Ethylenoxid und/oder Propylenoxid an Fettalkohole entstehen auf an sich bekannten Wegen aus den Produkten der industriellen Hydrierung nativer Fette bzw. Öle oder den aus ihnen hergestellten Säuren. Aus der Gruppe der Verbindungen mit der allgemeinen Formel **(II)** werden insbesondere diejenigen bevorzugt, in denen in der allgemeinen Formel **(II)** $R^3$ für einen geradkettigen Alkylrest mit 12 bis 18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht. Derartige sogenannte Mischether, beispielsweise in besonders bevorzugter Weise die Verbindung der allgemeinen Formel **(II)**, in der $R^3$ für ein Alkylrestgemisch mit 12 bis 18 C-Atomen, $R^4$ für H und $R^5$ für einen n-Butylrest steht und m im Bereich von 8 bis 10 liegt, wirken als oberflächenaktiver Wirkstoff allein besonders gut gegen

Dauerformen von Ascariden (Spulwürmern) und zeigen bei der Bekämpfung der Dauerformen dieser Parasiten in Kombination mit entsprechendem desinfizierenden Wirkstoff eine ausgezeichnete Wirksamkeit. Sie können jedoch auch mit anderen oberflächenaktiven Wirkstoffen kombiniert werden, so daß dann eine ausgezeichnete Wirksamkeit sowohl gegen Ascariden als auch gegen Dauerformen anderer Parasiten erreicht werden kann. Zur Bekämpfung von Ascariden-Eiern allein stellen diese Verbindungen, die auch kommerziell im Handel erhältlich sind, eine bevorzugte Ausführungsform der oberflächenaktiven Wirkstoffe dar.

Anstelle der bisher genannten oberflächenaktiven Wirkstoffe oder in Kombination mit diesen können auch Umesterungsprodukte verwendet werden, die aus alpha-Sulfofettsäureestern oder deren Salzen der allgemeinen Formel **(I)**, in der $R^1$, $R^2$ und $M^+$ die oben genannten Bedeutungen haben, mit Anlagerungsprodukten von Ethylenoxid und/oder Propylenoxid an Fettalkohole der allgemeinen Formel **(III)**,

$$R^6O(CH_2-CH_2-O)_m(CH_2-\underset{\displaystyle R^4}{\underset{|}{CH}}-O)_n(CH_2-CH_2-O)_pH \qquad \text{(III)}$$

in der

| | |
|---|---|
| $R^6$ | für geradkettige oder verzweigte Alkylreste mit 1 bis 18 C-Atomen, |
| $R^4$ | für Wasserstoff oder $CH_3$ steht und |
| m, n und p | unabhängig voneinander ganze Zahlen im Bereich von 0 bis 10 bedeuten, die Summe (m + n + p) maximal 30 und die Summe (m + p) maximal 20 beträgt, |

entstehen.

Die Polyetheralkohole der allgemeinen Formel **(III)** werden mit den alpha-Sulfofettsäureestern oder deren Salzen der allgemeinen Formel **(I)** in an sich bekannter Weise in einer Umesterungsreaktion umgesetzt. Es entstehen neue alpha-Sulfofettsäure-Polyetherester mit guter Wirksamkeit als oberflächenaktive Wirkstoffe in den erfindungsgemäßen Desinfektionsmitteln. Von derartigen Estersulfonat-Folgeprodukten finden bevorzugt diejenigen Verwendung, die mit Anlagerungsprodukten von Ethylenoxid und/oder Propylenoxid an Fettalkohole der allgemeinen Formel (III) erhalten werden, in der $R^6$ für einen geradkettigen Alkylrest mit 1 bis 18 C-Atomen, $R^4$ für Wasserstoff oder $CH_3$ und m, n und p unabhängig voneinander für ganze Zahlen im Bereich von 3 bis 10 stehen. Die daraus erhaltenen Estersulfonat-Folgeprodukte zeigen als oberflächenaktive Wirkstoffe allein in Kombination mit den oben genannten Desinfektionswirkstoffen eine hervorragende Wirksamkeit gegen parasitäre Protozoen, wie beispielsweise Coccidienoozysten. Sie werden deshalb als solche in einer bevorzugten Ausführungsform der vorliegenden Erfindung als oberflächenaktive Wirkstoffe allein verwendet, können jedoch auch mit beliebigen anderen oberflächenaktiven Substanzen der vorgenannten oder nachfolgend aufgeführten Art kombiniert werden, um gute Wirksamkeit nicht nur gegen parasitäre Protozoen, sondern auch gegen Dauerformen von Ascariden und anderen Helminten zu zeigen.

In einer bevorzugten Ausführungsform der vorliegenden Erfindung werden zur Bekämpfung und Abtötung sowohl von Ascarideneiern als auch von Coccidienoozysten, solche Desinfektionsmittel verwendet, bei denem man einen desinfizierenden Wirkstoff aus der oben näher beschriebenen Gruppe mit zwei oder mehreren oberflächenaktiven Wirkstoffen kombiniert, von denen mindestens einer aus der Gruppe der Verbindungen der allgemeinen Formel **(II)** stammt, in der $R^3$ für einen geradkettigen Alkylrest mit 12 bis 18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht und mindestens ein weiterer aus der Gruppe der Umesterungsprodukte von alpha-Sulfofettsäureestern oder ihren Salzen der allgemeinen Formel (I), in der $R^1$ für einen geradkettigen Alkylrest mit 12 bis 18 C-Atomen, $R^2$ für $CH_3$ und $M^+$ für $Na^+$ und das Diethanolammoniumkation steht, mit Anlagerungsprodukten von Ethylenoxid und/oder Propylenoxid an Fettalkohole der allgemeinen Formel **(III)** stammt, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 5 stehen.

Die erfindungsgemäß zu verwendenden Desinfektionsmittel enthalten aus den oben schon näher beschriebenen Gründen Wasser **(Komponente C)**. Dieses ist üblicherweise in einer Menge in den Desinfektionsmitteln enthalten, die die Summe der Mengen der desinfizierenden Wirkstoffe und der oberflächenaktiven Wirkstoffe zu 100 Gew.-% ergänzt. Bevorzugterweise liegt die Menge an Wasser im Bereich von 5 bis 35 Gew.-%; sie kann jedoch in Ausnahmefällen auch darunter oder darüber liegen.

In einer besonders bevorzugten Ausführungsform der Erfindung werden Desinfektionsmittel mit ausgezeichneter Wirkung sowohl gegen Spulwurmeier als auch gegen Coccidienoozysten Formaldehyd verwendet, bei denen die Menge des desinfizierenden Wirkstoffs im Bereich von 5 bis 60 Gew.-%, bezogen auf das Gesamtgewicht des Desinfektionsmittelkonzentrats, liegt, und die mehrere oberflächenaktive Wirkstoffe enthalten, von denen mindestens einer aus der Gruppe der Verbindungen der allgemeinen Formel **(II)** stammt, in der $R^3$ für einen geradkettigen Alkylrest mit 12 bis 18 C-Atomen, $R^4$ für H , $R^5$ für einen verzweigten Alkylrest mit 3 oder 4 C-Atomen und m für eine ganze Zahl im Bereich von 3 bis 10 steht, und mindestens ein weiterer aus der Gruppe der Umesterungsprodukte von alpha-Sulfofettsäureestern oder deren Salzen der allgemeinen Formel (I), in der $R^1$ für einen geradkettigen Alkylrest mit 12 bis 18 C-Atomen, $R^2$ für $CH_3$ und $M^+$ für $Na^+$ oder das Diethanolammoniumion steht, mit Anlagerungsprodukten von Ethylenoxid und/oder Propylenoxid an Fettalkohole der allgemeinen Formel **(III),** stammt, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 10 stehen, wobei die Summe der Mengen der oberflächenaktiven Wirkstoffe einen Gewichtsprozent-Anteil von 15 bis 40 Gew.-% erreicht und Wasser in einer Menge, die die Summe der Mengen von desinfizierenden Wirkstoffen und oberflächenaktiven Wirkstoffen zu 100 Gew.-% ergänzt.

Neben den oben genannten oberflächenaktiven Wirkstoffen, die bevorzugt verwendet werden, kommen - je nach Anwendungsbereich - auch noch weitere, an sich aus dem Stand der Technik bekannte Tenside zur Verwendung in den erfindungsgemäßen Desinfektionsmitteln in Frage.

Als solche sind beispielsweise Anlagerungsprodukte von Ethylenoxid und/oder Propylenoxid an Alkylphenole, z.B. Anlagerungsprodukte von Ethylenoxid und/oder Propylenoxid an Nonylphenol, Fettamine mit 8 bis 18 C-Atomen im Alkylrest, quartäre Ammoniumverbindungen der allgemeinen Formel **(IV),**

$$\mathbf{R^7R^8R^9R^{10}N^+X^-} \qquad \mathbf{(IV)}$$

in der

| | |
|---|---|
| $R^7$ | für einen geradkettigen Alkylrest mit 8 bis 18 C-Atomen, bevorzugt für geradkettige Alkylreste mit 12 bis 16 C-Atomen, |
| $R^8$ und $R^9$ | unabhängig voneinander für geradkettige Alkylreste mit 1 bis 4 C-Atomen, bevorzugt gleichzeitig für Methyl, |
| $R^{10}$ | für einen Benzylrest oder für einen geradkettigen Alkylrest mit 1 bis 4 C-Atomen, bevorzugt für Methyl, und |
| X | für Halogen, bevorzugt für Cl oder Br, |

steht,

2-Pyridinthiol-N-oxid und seine wasserlöslichen Alkalimetall- oder Erdalkalimetallsalze, bevorzugt seine wasserlöslichen Natriumsalze und schließlich

Alkylmono- oder Oligoglucoside mit 8 bis 18 C-Atomen in einem geradkettigen oder verzweigten Alkylrest und einer Zahl von 1 bis 8 Glucosidresten, bevorzugt Alkylmono- oder Oligoglucoside mit 12 bis 16 C-Atomen in einem geradkettigen Alkylrest und einer Zahl von 1 bis 3 Glucoseresten, zu nennen.

Im Sinne der Erfindung werden die oben näher beschriebenen Desinfektionsmittel mit parasitenabtötender Wirkung in der Regel in Form von Konzentraten verwendet, die Wasser in einer Menge von maximal 35 Gew.-% enthalten. Der Wasseranteil dient, wie schon näher ausgeführt, zur Verbesserung der Homogenität und Lagerbeständigkeit der Desinfektionsmittel-Konzentrate sowie zur Erleichterung der Auflösbarkeit der Konzentrate in Wasser bei der Herstellung verdünnter Anwendungslösungen. Vor der Anwendung zur Desinfektion gegen parasitäre Dauerformen, beispielsweise in Geflügel-, Schweine- oder Rinderställen, werden verdünnte Spüllösungen hergestellt, die einen Gehalt im Bereich von 0,5 bis 5 % der erfindungsgemäßen Desinfektionsmittel aufweisen und darüberhinaus aus Wasser bestehen. Derartige wässrige Lösungen werden in bekannter Weise in Stallungen, Tierboxen oder ähnlichem ausgesprüht oder in den von den Parasiten befallenen Räumen vernebelt und bewirken bei gleichmäßiger Verteilung eine sichere Abtötung von Spulwurmeiern bzw. Unschädlichmachung von Coccidienoozysten.

Ein besonderer Vorteil der erfindungsgemäß zu verwendenden Desinfektionsmittel bzw. der mit ihnen hergestellten verdünnten Anwendungslösungen besteht darin, daß weder bei der Herstellung noch beim Aussprühen giftige oder brennbare Dämpfe auftreten, wie sie aus früheren Desinfektionsmitteln, die $CS_2$ oder perhalogenierte Kohlenwasserstoffe enthielten, bekannt waren. Dadurch wird die Gefahr von Explosionen oder Bränden wie auch die Gefahr einer Vergiftung von Personal oder Nutztieren auf ein Minimum reduziert, wenn nicht ganz beseitigt. Zudem zeigen derartige Desinfektionsmittel eine hervorragende Wirksamkeit bei der Bekämpfung von Spulwurmeiern und/oder Coccidienoozysten.

Es ist mit den erfindungsgemäß zu verwendenden Desinfektionsmitteln möglich, Anwendungslösungen

bereitzustellen, die entweder gezielt zur selektiven Bekämpfung einer der genannten parasitären Dauerformen eingesetzt werden können, oder auch solche Lösungen zuzubereiten, die gegen mehrere Dauerformen gleichzeitig wirksam sind. Dabei erreichen die Desinfektionsmittel in der beschriebenen Verwendung deutlich bessere Ergebnisse, als sie nach den Richtlinien für die Prüfung chemischer Desinfektionsmittel der DVG (Deutsche Veterinärmedizinische Gesellschaft) gefordert werden. Um nach diesen Richtlinien ein Präparat als wirksam zu deklarieren, müssen über 90 % der Eier abgetötet sein bzw. dürfen die Oozysten nicht mehr infektiös sein. Mit den erfindungsgemäßen Mitteln ist eine Abtötungsrate von über 98 % der Eier bzw. eine quantitative Vernichtungsrate der Oozysten schon bei Einwirkzeiten und Konzentrationen in der Anwendungslösung zu erreichen, die deutlich unter den Werten für aus dem Stand der Technik bekannte Desinfektionsmittel für den gleichen Zweck liegen.

Die Erfindung wird durch das nachfolgende Beispiel näher erläutert.

**Beispiel**

Nach den Richtlinien für die Prüfung chemischer Desinfektionsmittel der DVG wurden zur Prüfung der Wirksamkeit der Desinfektionsmittel an parasitären Dauerformen noch nicht entwickelte Eier des Schweinespulwurms als Modellorganismen verwendet. Nach Literaturmeinung zählen diese Stadien der Parasiten zu den am schwierigsten abzutötenden parasitären Formen.

Zur Prüfung der Wirksamkeit von Desinfektionsmitteln gemäß der Erfindung gegen parasitäre Dauerformen wurden die Eier des Schweinespulwurms nach der Exposition ca. 21 Tage bei +25 °C bebrütet. Danach wurden pro Versuchsansatz 3 x 100 Eier ausgezählt. Daraus errechnete sich der Prozentsatz der abgetöteten und der embryonisierten Spulwurmeier. Um ein Präparat als wirksam zu deklarieren, mußten über 90% der Spulwurmeier abgetötet sein.

Beispiel 1

Es wurde ein Desinfektionsmittelkonzentrat aus folgenden Komponenten zusammengestellt, die miteinander gerührt und in Lösung gebracht wurden (Teile sind Gewichtsteile und entsprechen Gewichtsprozenten, bezogen auf das Gesamtgewicht des Konzentrats):
30 Teile Formaldehyd DAB 7,
15 Teile Glutaraldehyd (25 %),
30 Teile Glyoxal (40 %),
3 Teile $C_{12}/C_{14}$-Alkyl-dimethyl-benzylammoniumchlorid
5 Teile Biguanid,
10 Teile Anlagerungsprodukt von 10 Mol Ethylenoxid an Nonylphenol und
Duftstoffe und Wasser in einer Menge, die die Gesamtmenge aller Komponenten auf 100 Teile auffüllt.

Aus dem aus diesen Komponenten bestehenden Konzentrat wurde durch Verdünnen mit Wasser eine Anwendungslösung hergestellt, die
0,5 bis 3 Teile des obigen Konzentrats,
1 Teil eines Fettalkohol-Ethylenoxid-Anlagerungsproduktes der allgemeinen Formel (II), in der $R^3$ für ein Gemisch von Alkylresten mit 12 bis 18 C-Atomen, $R^4$ für H, $R^5$ für n-Butyl und m für 9 (Maximum der Produktverteilung) steht, und
96 bis 98,5 Teile Wasser
enthielt.

Dies waren also Anwendungslösungen, die 0,5 und 3 % des Konzentrates enthielten. Diese wurde in die Stallungen bzw. Tierboxen gesprüht. Nach der erforderlichen Einwirkzeit wurden die oben beschriebenen Untersuchungen entsprechend den DVG-Vorschriften durchgeführt.

Ergebnis:

Die Verwendung 0,5 %iger Lösung ergab eine 92 bis 96 %ige Abtötung der vorhandenen Spulwurmeier; die 3 %ige Lösung ergab eine Abtötung der Spulwurmeier oberhalb von 95 %. Beide Anwendungslösungen erfüllten also in vollem Umfang die Bestimmungen der DVG.

**Patentansprüche**

**1.** Verwendung von Desinfektionsmitteln, die
(A) einen oder mehrere Desinfektionswirkstoffe aus der Gruppe aliphatische Aldehyde mit 1 bis 5 C-Atomen,

(B) einen oder mehrere oberflächenaktive Wirkstoffe, aus der Gruppe

(a) alpha-Sulfofettsäureester und ihre Salze der allgemeinen Formel (I)

$$R^1 - \underset{\displaystyle SO_3M^+}{\underset{|}{CH}} - COOR^2 \qquad (I)$$

in der

- $R^1$ für einen geradkettigen oder verzweigten Alkylrest mit 8 bis 22 C-Atomen,
- $R^2$ für einen geradkettigen oder verzweigten Alkylrest mit 1 bis 4 C-Atomen und
- $M^+$ für das Wasserstoffion, ein Alkalimetallion oder ein Ammoniumion

steht,

(b) Ethylenoxid- und/oder Propylenoxid-Anlagerungsprodukte an Fettalkohole der allgemeinen Formel (II)

$$R^3 - O - (CH_2 - \underset{\displaystyle R^4}{\underset{|}{CHO}})_m - R^5 \qquad (II)$$

in der

- $R^3$ für einen geradkettigen oder verzweigten Alkylrest mit 8 bis 18 C-Atomen,
- $R^4$ für H oder $CH_3$,
- $R^5$ für einen geradkettigen oder verzweigten Alkylrest mit 1 bis 18 C-Atomen und
- m für eine ganze Zahl im Bereich von 1 bis 50

steht,

(c) Umesterungsprodukte von alpha-Sulfofettsäureestern und ihren Salzen der allgemeinen Formel (I), in der $R^1$, $R^2$ und $M^+$ die oben genannten Bedeutungen haben, mit Anlagerungsprodukten von Ethylenoxid und/oder Propylenoxid an Fettalkohole der allgemeinen Formel (III)

$$R^6-O-(CH_2-CH_2O)_m(CH_2-\underset{\displaystyle R^4}{\underset{|}{CH}}-O)_n(CH_2-CH_2-O)_pH \qquad (III)$$

in der

- $R^6$ für einen geradkettigen oder verzweigten Alkylrest mit 1 bis 18 C-Atomen,
- $R^4$ für H oder $CH_3$ steht und
- m, n und p unabhängig voneinander ganze Zahlen im Bereich von 0 bis 10 bedeuten, die Summe $(m+n+p)$ maximal 30 und die Summe $(m+p)$ maximal 20 ist,

(d) Anlagerungsprodukte von Ethylenoxid und/oder Propylenoxid an Alkylphenole,

(e) Fettamine mit 8 bis 18 C-Atomen im Alkylrest,

(f) quartäre Ammoniumverbindungen der allgemeinen Formel (IV)

$$R^7R^8R^9R^{10}N^+X^- \qquad (IV)$$

in der

- $R^7$ für einen geradkettigen Alkylrest mit 8 bis 18 C-Atomen,
- $R^8$ und $R^9$ unabhängig voneinander für einen geradkettigen Alkylrest mit 1 bis 4 C-Atomen,
- $R^{10}$ für einen Benzylrest oder für einen geradkettigen Alkylrest mit 1 bis 4 C-Atomen, bevorzugt für Methyl, und
X für Halogen
steht,
(g) 2-Pyridinthiol-N-oxid und seine wasserlöslichen Alkalimetall- oder Erdalkalimetallsalze und
(h) Alkylmono- oder -oligoglucoside mit 8 bis 18 C-Atomen in einem geradkettigen oder verzweigten Alkylrest und einer Zahl von 1 bis 8 Glucosidresten
und
(C) Wasser
enthalten, zur Bekämpfung und Abtötung von Spulwurmeiern und Coccidienoocysten.

**2.** Verwendung nach Anspruch 1, dadurch gekennzeichnet, daß die Desinfektionsmittel
(A) einen oder mehrere aliphatische Aldehyde in Mengen von 0,1 bis 80 Gew.-%, bezogen auf das Gesamtgewicht des Desinfektionsmittelkonzentrats,
(B) einen oder mehrere oberflächenaktive Wirkstoffe in Mengen von 10 bis 50 Gew.-%, bezogen auf das Gesamtgewicht des Desinfektionsmittelkonzentrats und
(C) Wasser in einer Menge, die die Summe der desinfizierend wirkenden und oberflächenaktiven Komponenten zu 100 Gew.-% ergänzt,
enthalten.

**3.** Verwendung nach Ansprüchen 1 und 2, dadurch gekennzeichnet, daß die Desinfektionsmittel Formaldehyd, Glyoxal und/oder Glutardialdehyd enthalten.

**4.** Verwendung nach Anspruch 3, dadurch gekennzeichnet, daß die Desinfektionsmittel Formaldehyd enthalten.

**5.** Verwendung nach Anspruch 4, dadurch gekennzeichnet, daß die Desinfektionsmittel einen oder mehrere oberflächenaktive Wirkstoffe aus der Gruppe der Verbindungen der allgemeinen Formel (I), in der $R^1$ für einen geradkettigen Alkylrest mit 12 bis 18 C-Atomen, $R^2$ für $CH_3$ und $M^+$ für $Na^+$ oder das Diethanolammoniumion steht, der Verbindung der allgemeinen Formel (II), in der $R^3$ für einen geradkettigen Alkylrest mit 8 bis 18 C-Atomen, $R^4$ für H, $R^5$ für einen geradkettigen oder verzweigten Alkylrest mit 1 bis 4 C-Atomen und m für eine Zahl im Bereich von 3 bis 10 steht, der Umesterungsprodukte von alpha-Sulfofettsäureesternund deren Salzen der allgemeinen Formel (I), in der $R^1$, $R^2$ und $M^+$ die oben angegebenen Bedeutungen haben, mit Anlagerungsprodukten von Ethylenoxid und/oder Propylenoxid an Fettalkohole der allgemeinen Formel (III), in der $R^6$ für geradkettige Alkylreste mit 1 bis 18 C-Atomen, $R^4$ für H oder $CH_3$ und m, n und p unabhängig voneinander für Zahlen im Bereich von 3 bis 10 stehen, der Verbindungen der allgemeinen Formel (IV), in der $R^7$ für einen geradkettigen Alkylrest mit 12 bis 16 C-Atomen, $R^8$, $R^9$ und $R^{10}$ für Methyl und X für Cl oder Br stehen, der Alkylmono- oder -oligoglucoside mit 12 bis 16 C-Atomen in einem geradkettigen Alkylrest und einer Zahl von 1 bis 3 Glucoseresten und der Anlagerungsprodukte von Ethylenoxid und/oder Propylenoxid an Nonylphenol enthalten.

**6.** Verwendung nach Anspruch 5, dadurch gekennzeichnet, daß die Desinfektionsmittel als oberflächenaktive Wirkstoffe eine oder mehrere Verbindungen aus der Gruppe der Verbindungen der allgemeinen Formel (II) enthalten, in der $R^3$ für einen geradkettigen Alkylrest mit 12 bis 18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht.

**7.** Verwendung nach Anspruch 5, dadurch gekennzeichnet, daß die Desinfektionsmittel als oberflächenaktive Wirkstoffe eine oder mehrere Verbindungen aus der Gruppe der Umesterungprodukte von alpha-Sulfofettsäureestern oder ihren Salzen der allgemeinen Formel (I), in der $R^1$ für einen geradkettigen Alkylrest mit 12 bis 18 C-Atomen, $R^2$ für H und $M^+$ für $Na^+$ oder das Diethanolammoniumion steht, mit Anlagerungsprodukten von Ethylenoxid und/oder Propylenoxid an Fettalkohole der allgemeinen formel (III) enthalten, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 10 stehen.

**8.** Verwendung nach Anspruch 5, dadurch gekennzeichnet, daß die Desinfektionsmittel als oberflächenaktive Wirkstoffe mehrere Verbindungen enthalten, von denen mindestens eine aus der Gruppe dem Verbindungen der allgemeinen Formel (II) stammt, in der $R^3$ für einen geradkettigen Alkylrest mit 12 bis

18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht, und zusätzlich mindestens ein weiterer aus der Gruppe der Umesterungsprodukte von alpha-Sulfofettsäureestern oder ihren Salzen der allgemeinen Formel (I), in der $R^1$ für einen geradkettigen Alkylrest mit 12 bis 18 C-Atomen, $R^2$ für H und $M^+$ für $Na^+$ oder das Diethylammoniumion steht, mit Anlagerungsprodukten von Ethylenoxid an Fettalkohole der allgemeinen Formel (III) stammt, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 10 stehen.

**9.** Verwendung nach Ansprüchen 1 bis 8, dadurch gekennzeichnet, daß die Desinfektionsmittel
(A) Formaldehyd in einer Menge im Bereich von 5 bis 60 Gew.-%, bezogen auf das Gesamtgewicht des Desinfektionsmittel-Konzentrats,
(B) mehrere Verbindungen aus der Gruppe der oberflächenaktiven Wirkstoffe, von denen mindestens eine aus der Gruppe der Verbindungen der allgemeinen Formel (II) stammt, in der $R^3$ für einen geradkettigen Alkylrest mit 12 bis 18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht, und mindestens eine weitere aus der Gruppe der Umesterungsprodukte von alpha-Sulfofettsäureestern oder ihren Salzen der allgemeinen Formel (I), in der $R^1$ für einen geradkettigen Alkrest mit 12 bis 18 C-Atomen, $R^2$ für H und $M^+$ für $Na^+$ oder das Diethylammoniumion steht, mit Anlagerungsprodukten von Ethylenoxid und/oder Propylenoxid an Fettalkohole der allgemeinen Formel (III) stammt, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 10 stehen, wobei die Summe der Menge der oberflächenaktiven Wirkstoffe im Bereich von 15 bis 40 Gew.-% liegt,
(C) Wasser in einer Menge, die die Summe der Mengen der desinfizierenden und der oberflächenaktiven Wirkstoffe zu 100 Gew.-% ergänzt,
enthalten.

**10.** Verwendung nach Ansprüchen 1 bis 9, dadurch gekennzeichnet, daß die Desinfektionsmittel in verdünnten wässrigen Lösungen mit einem Desinfektionsmittel-Gehalt von 0,5 bis 5 Gew.-%, bezogen auf die Anwendungslösung, eingesetzt werden.

**Claims**

**1.** The use of disinfectants containing
(A) one or more active disinfecting components from the group comprising aliphatic $C_1$-$C_5$ aldehydes,
(B) one or more surface-active components from the group consisting of
(a) α-sulfofatty acid esters and salts thereof corresponding to general formula **(I)**

$$R^1 - \underset{\displaystyle SO_3^-M^+}{\underset{|}{CH}} - COOR^2 \qquad \text{(I)}$$

in which
$R^1$ is a straight-chain or branched $C_8$-$C_{22}$ alkyl radical,
$R^2$ is a straight-chain or branched $C_1$-$C_4$ alkyl radical and
$M^+$ is the hydrogen ion, an alkali metal ion, or an ammonium ion,
(b) ethylene oxide and/or propylene oxide adducts with fatty alcohols corresponding to general formula **(II)**

$$R^3 - O - (CH_2 - \underset{\displaystyle R^4}{\underset{|}{CHO}})_m - R^5 \qquad \text{(II)}$$

in which

$R^3$ is a straight-chain or branched $C_8$-$C_{18}$ alkyl radical,
$R^4$ is H or $CH_3$,
$R^5$ is a straight-chain or branched $C_1$-$C_{18}$ alkyl radical and
m is an integer of from 1 to 50,

(c) transesterification products of α-sulfofatty acid esters and salts thereof corresponding to general formula (I), in which $R^1$, $R^2$ and $M^+$ are as defined above, with adducts corresponding to general formula **(III)** of ethylene oxide and/or propylene oxide with fatty alcohols

$$R^6-O-(CH_2-CH_2O)_m(CH_2-\underset{\substack{|\\ R^4}}{CH}-O)_n(CH_2-CH_2-O)_pH \qquad (III)$$

in which

$R^6$ is a straight-chain or branched $C_1$-$C_{18}$ alkyl radical,
$R^4$ is H or $CH_3$ and
m, n and p independnently of one another are integers of from 0 to 10, the sum (m + n + p) being at most 30 and the sum (m + p) is at most 20,

(d) adducts of ethylene oxide and/or propylene oxide with alkylphenols,
(e) fatty amines containing from 8 to 18 carbon atoms in the alkyl radical,
(f) quaternary ammonium compounds corresponding to general formula **(IV)**

$$R^7R^8R^9R^{10}N^+X^- \qquad (IV)$$

in which

$R^7$ is a straight-chain $C_8$-$C_{18}$ alkyl radical,
$R^8$ and $R^9$ independently of one another represent a straight-chain $C_1$-$C_4$ alkyl radical
$R^{10}$ is a benzyl radical or a straight-chain $C_1$-$C_4$ alkyl radical, preferably methyl, and
X is halogen,

(g) 2-pyridinethiol-N-oxide and water-soluble alkali metal or alkaline earth metal salts thereof and
(h) alkyl mono- or oligoglucosides containing from 8 to 18 carbon atoms in a straight-chain or branched alkyl radical and from 1 to 8 glucoside residues

and
(C) water

for the control and destruction of eelworm eggs and coccidial oocysts.

**2.** The use claimed in claim 1, characterized in that the disinfectants contain
(A) one or more aliphatic aldehydes in quantities of from 0.1 to 80% by weight, based on the total weight of the disinfectant concentrate,
(B) one or more surface-active components in quantities of from 10 to 50% by weight, based on the total weight of the disinfectant concentrate, and
(C) water in a quantity which makes up the sum of the active disinfecting and surface-active components to 100% by weight.

**3.** The use claimed in claims 1 and 2, characterized in that the disinfectants contain one or more active disinfecting components from the group comprising formaldehyde, glyoxal and/or glutardialdehyde.

**4.** The use claimed in claim 3, characterized in that the disinfectants contain formaldehyde.

**5.** The use claimed in claim 4, characterized in that the disinfectants contain one or more surface-active components from the group of compounds corresponding to general formula (I), in which $R^1$ is a straight-chain $C_{12}$-$C_{18}$ alkyl radical, $R^2$ is $CH_3$ and $M^+$ is $Na^+$ or the diethanolammonium ion, the compound corresponding to general formula (II), in which $R^3$ is a straight-chain $C_8$-$C_{18}$ alkyl radical, $R^4$ is H, $R^5$ is a straight-chain or branched $C_1$-$C_4$ alkyl radical and m is a number of from 3 to 10, the transesterification products of α-sulfofatty acid esters and salts thereof corresponding to general formula (I), in which $R^1$, $R^2$ and $M^+$ are as defined above, with adducts corresponding to general

formula (III) of ethylene oxide and/or propylene oxide with fatty alcohols, in which $R^6$ represents straight-chain $C_1$-$C_{18}$ alkyl radicals, $R^4$ is H or $CH_3$ and m, n and p independently of one another are numbers of from 3 to 10, the compounds corresponding to general formula (IV), in which $R^7$ is a straight-chain $C_{12}$-$C_{16}$ alkyl radical, $R^8$, $R^9$ and $R^{10}$ are methyl and X is Cl or Br, the alkyl mono- or oligoglucosides containing from 12 to 16 carbon atoms in a straight-chain alkyl radical and from 1 to 3 glucose residues and the adducts of ethylene oxide and/or propylene oxide with nonylphenol.

**6.** The use claimed in claim 5, characterized in that the disinfectants contain as surface-active components one or more compounds from the group of compounds corresponding to general formula (II), in which $R^3$ is a straight-chain $C_{12}$-$C_{18}$ alkyl radical, $R^4$ is H, $R^5$ is a straight-chain or branched $C_3$ or $C_4$ alkyl radical and m is an integer of from 3 to 10.

**7.** The use claimed in claim 5, characterized in that the disinfectant contain as surface-active components one or more compounds from the group of transesterification products of $\alpha$-sulfofatty acid esters or salts thereof corresponding to general formula (I), in which $R^1$ is a straight-chain $C_{12}$-$C_{18}$ alkyl radical, $R^2$ is H and $M^+$ is $Na^+$ or the diethanolammonium ion, with adducts corresponding to general formula (III) of ethylene oxide and/or propylene oxide with fatty alcohols, in which $R^6$ is a straight-chain $C_{12}$-$C_{18}$ alkyl radical, $R^4$ is H or $CH_3$ and m, n and p independently of one another are integers of from 3 to 10.

**8.** The use claimed in claim 5, characterized in that the disinfectants contain as surface-active components several compounds of which at least one emanates from the group of compounds corresponding to general formula (II), in which $R^3$ is a straight-chain $C_{12}$-$C_{18}$ alkyl radical, $R^4$ is H, $R^5$ is a straight-chain or branched $C_3$ or $C_4$ alkyl radical and m is an integer of from 3 to 10, and in addition at least one other from the group of transesterification products of $\alpha$-sulfofatty acid esters or salts thereof corresponding to general formula (I), in which $R^1$ is a straight-chain $C_{12}$-$C_{18}$ alkyl radical, $R^2$ is H and $M^+$ is $Na^+$ or the diethanolammonium ion, with adducts corresponding to general formula (III) of ethylene oxide with fatty alcohols, in which $R^6$ is a straight-chain $C_{12}$-$C_{18}$ alkyl radical, $R^4$ is H or $CH_3$ and m, n and p independently of one another are integers of from 3 to 10.

**9.** The use claimed in claims 1 to 8, characterized in that the disinfectants contain
(A) formaldehyde in a quantity of 5 to 60% by weight, based on the total weight of the disinfectant concentrate,
(B) several compounds from the group of surface-active components of which at least one emanates from the group of compounds corresponding to general formula (II), in which $R^3$ is a straight-chain $C_{12}$-$C_{18}$ alkyl radical, $R^4$ is H, $R^5$ is a straight-chain or branched $C_3$ or $C_4$ alkyl radical and m is an integer of from 3 to 10, and at least one other from the group of transesterification products of $\alpha$-sulfofatty acid esters or salts thereof corresponding to general formula (I), in which $R^1$ is a straight-chain $C_{12}$-$C_{18}$ alkyl radical, $R^2$ is H and $M^+$ is $Na^+$ or the diethanolammonium ion, with adducts corresponding to general formula (III) of ethylene oxide and/or propylene oxide with fatty alcohols, in which $R^6$ is a straight-chain $C_{12}$-$C_{18}$ alkyl radical, $R^4$ is H or $CH_3$ and m, n and p independently of one another are integers of from 3 to 10, the sum of the quantity of surface-active components being from 15 to 40% by weight,
(C) water in a quantity which makes up the sum of the quantities of the active disinfecting and surface-active components to 100% by weight.

**10.** The use claimed in claims 1 to 9 characterized in that the disinfectants are used in dilute aqueous solutions having a disinfectant content of from 0.5 to 5% by weight, based on the dilute in-use solution.

### Revendications

**1.** Utilisation d'agents désinfectants qui contiennent :
A) une ou plusieurs substances désinfectantes du groupe des aldéhydes aliphatiques avec 1 à 5 atomes de C,
B) une ou plusieurs substances tensio-actives, du groupe,
a) des esters d'acides gras alphasulfonés et de leurs sels de formule générale (I) :

$$R^1-\underset{\underset{SO_3^-M^+}{|}}{CH}-COOR^2 \qquad (I)$$

dans laquelle :
$R^1$ est un reste alkyle linéaire ou ramifié avec 8 à 22 atomes de C,
$R^2$ est un reste alkyle linéaire ou ramifié avec 1 à 4 atomes de C et
$M^+$ est l'ion hydrogène, un ion de métal alcalin ou un ion ammonium,
b) des produits d'addition d'oxyde d'éthylène et/ou d'oxyde de propylène sur des alcools gras de formule générale (II) :

$$R^3-O-(CH_2-\underset{\underset{R^4}{|}}{CHO})_m-R^5 \qquad (II)$$

dans laquelle :
$R^3$ est un reste alkyle linéaire ou ramifié de 8 à 18 atomes de C,
$R^4$ est H ou $CH_3$,
$R^5$ est un reste alkyle linéaire ou ramifié avec 1 à 18 atomes de C et,
m est un nombre entier dans l'intervalle de 1 à 50,
c) des produits de transestérification d'esters d'acides gras alphasulfonés et de leurs sels de formule générale (I) dans laquelle $R^1$, $R^2$ et $M^+$ ont les significations données ci-dessus, avec des produits d'addition d'oxyde d'éthylène et/ou d'oxyde de propylène sur des alcools gras de formule générale (III) :

$$R_6-O-(CH_2CH_2O)_m(CH_2\underset{\underset{R^4}{|}}{CHO})_n(CH_2CH_2-O)_pH \qquad (III)$$

dans laquelle :
$R^6$ est un reste alkyle linéaire ou ramifié avec 1 à 18 atomes de C,
$R^4$ est H ou $CH_3$ et,
m, n et p représentent indépendamment l'un de l'autre des nombres entiers dans l'intervalle de 0 à 10, la somme (m + n + p) valant 30 au maximum et la somme (m + p) valant 20 au maximum,
d) des produits d'addition d'oxyde d'éthylène et/ou d'oxyde de propylène sur des alkylphénols,
e) des amines grasses avec de 8 à 18 atomes de C dans le reste alkyle,
f) des composés d'ammonium quaternaire de formule générale (IV) :

$R^7R^8R^9R^{10}N^+X^-$ (IV)

dans laquelle :
$R^7$ est un reste alkyle linéaire de 8 à 18 atomes de C,
$R^8$ et $R^9$ représentent indépendamment l'un de l'autre un reste alkyle linéaire avec 1 à 4 l'autre un reste alkyle linéaire avec 1 à 4 atomes de C,
$R^{10}$ représente un reste benzyle ou un reste alkyle linéaire avec 1 à 4 atomes de carbone, de préférence le méthyle, et
X représente un halogène
g) le N-oxyde de 2-pyridinethiol et ses sels solubles dans l'eau de métal alcalin ou alcalino-terreux et,
h) des alkylmono- ou oligoglucosides avec de 8 à 18 atomes de C dans un reste alkyle linéaire

ou ramifié et un nombre de 1 à 8 restes glucoside, et

C) de l'eau,

pour combattre et détruire des oeufs d'ascarides et des oocystes de coccidies.

**2.** Utilisation selon la revendication 1, caractérisée en ce que les agents désinfectants contiennent :

A) un ou plusieurs aldéhydes aliphatiques à des concentrations de 0,1 à 80 % en poids, par rapport au poids total du concentré d'agent désinfectant,

B) une ou plusieurs substances tensio-actives à des concentrations de 10 à 50 % en poids, rapporté au poids total du concentré d'agent désinfectant et,

C) de l'eau à une concentration qui est le complément à 100 % en poids de la somme des composants tensioactifs et à action désinfectante.

**3.** Utilisation selon les revendications 1 et 2, caractérisée en ce que les agents désinfectants contiennent du formaldéhyde, du glyoxal et/ou du dialdéhyde glutarique.

**4.** Utilisation selon la revendication 3, caractérisée en ce que les agents désinfectants contiennent du formaldéhyde.

**5.** Utilisation selon la revendication 4, caractérisée en ce que les agents désinfectants contiennent une ou plusieurs substances tensio-actives du groupe des composés de formule générale (L), dans laquelle $R^1$ est un reste alkyle à chaîne linéaire de 12 à 18 atomes de C, $R^2$ est $CH_3$ et $M^+$ est $Na^+$ ou l'ion diéthanolammonium, du composé de formule générale (II) dans laquelle $R^3$ est un reste alkyle linéaire de 8 à 18 atomes de C, $R^4$ est H, $R^5$ est un reste alkyle à chaîne linéaire ou ramifié avec 1 à 4 atomes de C et m est un nombre dans l'intervalle de 3 à 10, des produits de transestérification d'esters d'acides gras alphasulfonés et de leurs sels de formule générale (L), dans laquelle $R^1$, $R^2$ et $M^+$ ont les significations données ci-dessus, avec des produits d'addition d'oxyde d'éthylène et/ou d'oxyde de propylène sur des alcools gras de formule générale (III) dans laquelle $R^6$ représente des restes alkyle linéaires de 1 à 18 atomes de C, $R^4$ est H ou $CH_3$ et m, n et p représentent indépendamment l'un de l'autre des nombres de l'intervalle 3 à 10, des composés de formule générale (IV) dans laquelle $R^7$ est un reste alkyle linéaire de 12 à 16 atomes de C, $R^8$, $R^9$ et $R^{10}$ sont le méthyle et X est Cl ou Br, des alkylmono- ou -oligoglucosides de 12 à 16 atomes de C dans un reste alkyle linéaire et un nombre de 1 à 3 de restes glucose et des produits d'addition d'oxyde d'éthylène et/ou d'oxyde de propylène sur le nonylphénol.

**6.** Utilisation selon la revendication 5, caractérisée en ce que les agents désinfectants contiennent comme substance tensio-active un ou plusieurs composés du groupe des composés de formule générale (II), dans laquelle $R^3$ est un reste alkyle linéaire de 12 à 18 atomes de C, $R^4$ est H, $R^5$ est un reste linéaire ou ramifié de 3 ou 4 atomes de C et m est un nombre entier dans l'intervalle de 3 à 10.

**7.** Utilisation selon la revendication 5, caractérisée en ce que les agents désinfectants contiennent comme substances tensio-actives un ou plusieurs composés du groupe des produits de transestérification d'esters d'acides gras alphasulfonés ou de leurs sels de formule générale (L) dans laquelle $R^1$ est un reste alkyle de 12 à 18 atomes de C, $R^2$ est H et $M^+$ est $Na^+$ ou l'ion diéthanolammonium, avec des produits d'addition d'oxyde d'éthylène et/ou d'oxyde de propylène sur des alcools gras de formule générale (III) dans laquelle $R^6$ est un reste alkyle linéaire de 12 à 18 atomes de C, $R^4$ est H ou $CH_3$ et m, n et p indépendamment l'un de l'autre représentent des nombres entiers dans l'intervalle de 3 à 10.

**8.** Utilisation selon la revendication 5, caractérisée en ce que les agents désinfectants contiennent comme substances tensio-actives plusieurs composés, dont au moins un du groupe des composés de formule générale (II), dans laquelle $R^3$ est un reste alkyle linéaire de 12 à 18 atomes de C, $R^4$ est H, $R^5$ est un reste alkyle linéaire ou ramifié de 3 ou 4 atomes de C et m est un nombre entier dans l'intervalle de 3 à 10, et au moins en plus un autre composé du groupe des produits de transestérification d'esters d'acides gras alphasulfonés ou de leurs sels de formule générale (I), dans laquelle $R^1$ est un reste alkyle linéaire de 12 à 18 atomes de C, $R^2$ est H et $M^+$ est $Na^+$ ou l'ion diéthylammonium, avec des produits d'addition de l'oxyde d'éthylène sur des alcools gras de formule générale (III), dans laquelle $R^6$ est un reste alkyle linéaire de 12 à 18 atomes de C, $R^4$ est H ou $CH_3$ et m, n et p indépendamment l'un de l'autre sont des nombres entiers dans l'intervalle de 3 à 10.

**9.** Utilisation selon les revendications 1 à 8, caractérisée en ce que les agents désinfectants contiennent :

A) du formaldéhyde à une concentration comprise entre 5 et 60 % en poids, par rapport au poids total du concentré d'agent désinfectant,

B) plusieurs composés du groupe des substances tensioactives, dont au moins une vient du groupe des composés de formule générale (II), dans laquelle $R^3$ est un reste alkyle linéaire de 12 à 18 atomes de C, $R^4$ est H, $R^5$ est un reste alkyle linéaire ou ramifié de 3 ou 4 atomes de C et m est un nombre entier dans l'intervalle 3 à 10, et au moins une autre vient du groupe des produits de transestérification d'esters d'acide gras alphasulfonés ou de leurs sels de formule générale (L), dans laquelle $R^1$ est un reste alkyle de 12 à 18 atomes de C, $R^2$ est H et $M^+$ est $Na^+$ ou l'ion diéthylammonium, avec des produits d'addition de l'oxyde d'éthylène et/ou de l'oxyde de propylène sur des alcools gras de formule générale (III) dans laquelle $R^6$ est un reste alkyle linéaire de 12 à 18 atomes de C, $R^4$ est H ou $CH^3$ et m, n et p représentent indépendamment l'un de l'autre des nombres entiers dans l'intervalle de 3 à 10, la somme des quantités des substances tensio-actives étant comprise dans l'intervalle de 15 à 40 % en poids,

C) de l'eau en une concentration qui est le complément à 100 % en poids des quantités de substances actives désinfectantes et de substances tensio-actives.

**10.** Utilisation selon les revendications 1 à 9, caractérisée en ce qu'on utilise les agents désinfectants en solutions aqueuses diluées avec une teneur en agent désinfectant de 0,5 à 5 % en poids, par rapport à la solution d'application.